(19) **Europäisches Patentamt**

**European Patent Office**

**Office européen des brevets**

(11) **EP 4 641 252 A1**

(12) **EUROPEAN PATENT APPLICATION**

(43) Date of publication:
29.10.2025 Bulletin 2025/44

(21) Application number: 25171329.3

(22) Date of filing: 17.04.2025

(51) International Patent Classification (IPC):
*G01S 13/00* (2006.01)    *G01S 13/02* (2006.01)
*G01S 13/10* (2006.01)    *G01S 13/30* (2006.01)

(52) Cooperative Patent Classification (CPC):
**G01S 13/0209; G01S 13/003; G01S 13/106;**
**G01S 13/30**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 26.04.2024 US 202418647696

(71) Applicant: **NXP B.V.**
**5656 AG Eindhoven (NL)**

(72) Inventors:
• **Thimme Gowda, Kiran**
**5656AG Eindhoven (NL)**
• **Jain, Divyanshu**
**5656AG Eindhoven (NL)**

(74) Representative: **Krott, Michel**
**NXP Semiconductors**
**Intellectual Property Group**
**High Tech Campus 60**
**5656 AG Eindhoven (NL)**

(54) **METHOD OF PERFORMING RADAR OPERATIONS, RADAR DEVICE AND RADAR SYSTEM**

(57)    In accordance with a first aspect of the present disclosure, a method of performing radar operations is conceived, comprising: transmitting a first radar frame over a first communication channel, wherein said first radar frame comprises a first stream of one or more ultra-wideband radio frequency pulses and wherein transmitting said first radar frame over the first communication channel includes transmitting said radar frame within a first frequency band; transmitting a second radar frame over a second communication channel, wherein said second radar frame comprises a second stream of one or more ultra-wideband radio frequency pulses and wherein transmitting said second radar frame over the second communication channel includes transmitting said radar frame within a second frequency band; receiving a reflection of the first radar frame and estimating a first channel impulse response based on said reflection of the first radar frame; receiving a reflection of the second radar frame and estimating a second channel impulse response based on said reflection of the second radar frame; combining the first channel impulse response estimate with the second channel impulse response estimate to obtain a channel impulse response estimate having a higher resolution than each of the first channel impulse response estimate and second channel impulse response estimate.

300

FIG. 3

**Description**

TECHNICAL FIELD

The present disclosure relates to a method of performing radar operations. Furthermore, the present disclosure relates to a corresponding radar device and to a corresponding radar system.

BACKGROUND

Ultra-wideband (UWB) communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e. for determining the distance between communicating devices. Therefore, UWB technology may be used to advantage in various applications, such as automotive applications. In addition, UWB technology may be used to carry out radar operations, e.g. for detecting objects or persons within a predefined area.

SUMMARY

In accordance with a first aspect of the present disclosure, a method of performing radar operations is conceived, comprising: transmitting a first radar frame over a first communication channel, wherein said first radar frame comprises a first stream of one or more ultra-wideband radio frequency pulses and wherein transmitting said first radar frame over the first communication channel includes transmitting said radar frame within a first frequency band; transmitting a second radar frame over a second communication channel, wherein said second radar frame comprises a second stream of one or more ultra-wideband radio frequency pulses and wherein transmitting said second radar frame over the second communication channel includes transmitting said radar frame within a second frequency band; receiving a reflection of the first radar frame and estimating a first channel impulse response based on said reflection of the first radar frame; receiving a reflection of the second radar frame and estimating a second channel impulse response based on said reflection of the second radar frame; combining the first channel impulse response estimate with the second channel impulse response estimate to obtain a channel impulse response estimate having a higher resolution than each of the first channel impulse response estimate and second channel impulse response estimate.

In one or more embodiments, the first frequency band and the second frequency band are non-overlapping frequency bands.

In one or more embodiments, the first frequency band and the second frequency band are adjacent frequency bands.

In one or more embodiments, combining the first channel impulse response estimate with the second channel impulse response estimate includes performing an equalization and add operation on the first channel impulse response estimate and the second channel impulse response estimate.

In one or more embodiments, the first stream of ultra-wideband radio frequency pulses is based on the function:

$$p_u(t) = p_+(t)e^{-j2\pi(BW/4)t},$$

wherein t denotes time, and:

$$p_+(t) = p(t) + j\widehat{p(t)},$$

wherein p(t) is a real-valued ultra-wideband radio frequency pulse waveform with a bandwidth BW and $\widehat{p(t)}$ denotes the Hilbert transformation of *p(t)*.

In one or more embodiments, the second stream of ultra-wideband radio frequency pulses is based on the function:

$$p_l(t) = p_-(t)e^{+j2\pi(BW/4)t},$$

wherein t denotes time, and:

$$p_-(t) = p(t) - j\widehat{p(t)},$$

wherein p(t) is a real-valued ultra-wideband radio frequency pulse waveform with a bandwidth BW and $\widehat{p(t)}$ denotes the Hilbert transformation of *p(t)*.

In one or more embodiments, the method further comprises applying the same radio filter settings for transmitting the first radar frame and transmitting the second radar frame, and enlarging the bandwidth of the filter for transmitting the first radar frame and the second radar frame.

In one or more embodiments, the method further comprises applying the same radio filter settings for receiving the reflection of the first radar frame and receiving the reflection of the second radar frame, and enlarging the bandwidth of the filter for receiving the reflection of the first radar frame and the second radar frame.

In one or more embodiments, the first frequency band and the second frequency band have the same bandwidth or approximately the same bandwidth.

In one or more embodiments, each of the first frequency band and the second frequency band have an approximate bandwidth of 500 MHz.

In one or more embodiments, the steps of transmitting the first radar frame and transmitting the second radar frame, receiving the reflections of the first radar frame and the second radar frame, and combining the first channel impulse response estimate with the second channel impulse response estimate are performed by a single radar device.

In one or more embodiments, the steps of transmitting the first radar frame and transmitting the second radar frame are performed by a first radar device, and wherein the steps of receiving the reflections of the first radar frame and the second radar frame, and combining the first channel impulse response estimate with the second channel impulse response estimate are performed by a second radar device.

In accordance with a second aspect of the present disclosure, a radar device is provided, comprising: a transmitter configured to transmit a first radar frame over a first communication channel, wherein said first radar frame comprises a first stream of one or more ultra-wideband radio frequency pulses and wherein transmitting said first radar frame over the first communication channel includes transmitting said radar frame within a first frequency band; the transmitter further being configured to transmit a second radar frame over a second communication channel, wherein said second radar frame comprises a second stream of one or more ultra-wideband radio frequency pulses and wherein transmitting said second radar frame over the second communication channel includes transmitting said radar frame within a second frequency band; a receiver configured to receive a reflection of the first radar frame and to estimate a first channel impulse response based on said reflection of the first radar frame; the receiver further being configured to receive a reflection of the second radar frame and to estimate a second channel impulse response based on said reflection of the second radar frame; a processing unit configured to combine the first channel impulse response estimate with the second channel impulse response estimate to obtain a channel impulse response estimate having a higher resolution than each of the first channel impulse response estimate and second channel impulse response estimate.

In accordance with a third aspect of the present disclosure, a radar system is provided, comprising: a first radar device configured to transmit a first radar frame over a first communication channel, wherein said first radar frame comprises a first stream of one or more ultra-wideband radio frequency pulses and wherein transmitting said first radar frame over the first communication channel includes transmitting said radar frame within a first frequency band; the first radar device further being configured to transmit a second radar frame over a second communication channel, wherein said second radar frame comprises a second stream of one or more ultra-wideband radio frequency pulses and wherein transmitting said second radar frame over the second communication channel includes transmitting said radar frame within a second frequency band; a second radar device configured to receive a reflection of the first radar frame and to estimate a first channel impulse response based on said reflection of the first radar frame; the second radar device further being configured to receive a reflection of the second radar frame and to estimate a second channel impulse response based on said reflection of the second radar frame; the second radar device further being configured to combine the first channel impulse response estimate with the second channel impulse response estimate to obtain a channel impulse response estimate having a higher resolution than each of the first channel impulse response estimate and second channel impulse response estimate.

DESCRIPTION OF DRAWINGS

Embodiments will be described in more detail with reference to the appended drawings.

Fig. 1 shows an example of a target detection system.

Fig. 2 shows an example of an ideal channel impulse response in a radar system with two targets.

Fig. 3 shows an illustrative embodiment of a method of performing radar operations.

Fig. 4A shows an illustrative embodiment of a radar device.

Fig. 4B shows an illustrative embodiment of a radar system.

Fig. 5 shows pulse waveforms in a time domain.

Fig. 6 shows a UWB pulse.

Fig. 7 shows sub-channel pulse shapes in a frequency domain.

Fig. 8 shows a pulse transmission and CIR combining technique.

DESCRIPTION OF EMBODIMENTS

UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. In addition to ranging operations of this kind, UWB devices may also carry out radar operations. Thus, UWB devices may operate in a ranging mode, as well as in a radar mode.

In a ranging mode of operation, frames will typically be exchanged between two devices via at least one antenna on each device, and at least a SS-TWR operation or DS-TWR operation will be carried out. In particular, channel impulse responses (CIRs) are estimated on both devices, timestamps will be generated based on the CIRs on both devices, and those timestamps are exchanged. These timestamps form the basis for calculating a distance between the two devices.

In a radar mode of operation, frames are transmitted by at least one device and those frames are received by the same device and/or by one or more other devices. Then, the CIRs are estimated on the device or devices receiving the frames, and the range and/or velocity and/or AoA are calculated based on the estimated CIRs. A radar mode of operation may be used to advantage to detect (i.e., sense) the presence of objects or human beings. The skilled person will appreciate that the given examples are non-limiting examples of how the different modes of operation can be implemented. In other words, the modes may be implemented differently, depending on the requirements imposed by the application, for example.

Although a UWB-based radar system may efficiently detect targets in a predefined area, the accuracy of said detection may not always be sufficient, specifically when the bandwidth of the system is limited. For example, a UWB-based radar system with a bandwidth limited to 500 MHz cannot properly distinguish between two targets that are spaced less than 30 centimeters apart. The resolution in distinguishing such closely spaced targets needs a wider bandwidth impulse transmission, which implies increasing bandwidth of both the transmitter and the receiver, including the antenna, analog-to-digital converter (ADC) sampling rate and associated digital signal processing. However, designing antennas and ADCs with sampling rates beyond 1 GHz increases the cost, complexity and the power consumption of the device.

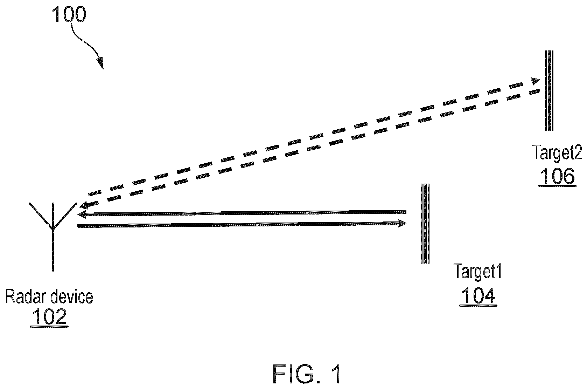

**Fig. 1** shows an example of a target detection system 100. The target detection system 100 comprises a radar device 102, which is configured to detect targets 104, 106 in a predefined area. In particular, the radar device 102 is configured to transmit short pulses and to listen to reflections from targets to estimate their distance. In this mono-static radar system 100, the transmission and reception of pulses is carried out by a single radar device 102. A radar receiver (not shown) which is included in the radar device 102 estimates a channel impulse response (CIR) from the reflected pulses; the number of distinct pulses in the CIR determines the number of targets in a line-of-sight (LOS) environment, where there is a distinct path from each target to the radar device with no additional reflection paths.

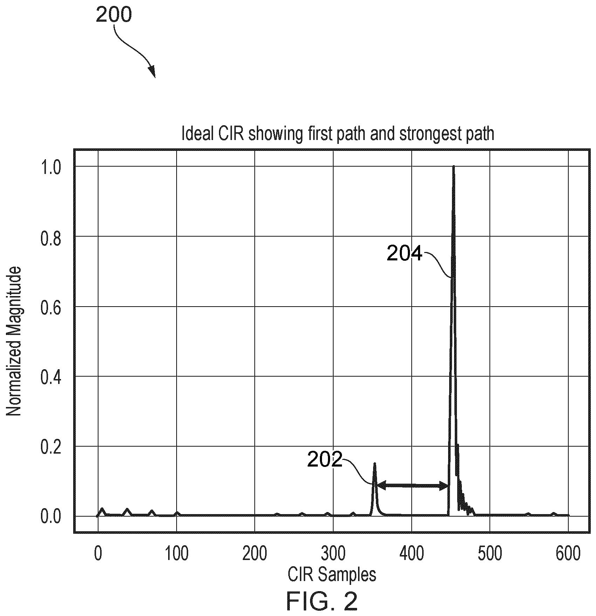

**Fig. 2** shows an example of an ideal channel impulse response (CIR) 200 in a radar system with two targets. The spacing between reflected pulses, i.e. the first path 202 and the strongest path 204, in the CIR (indicated with the arrow in the picture) is proportional to the relative distance between targets, and the pulse width itself is inversely proportional to the bandwidth of the system (BW), which includes the transmitter and the receiver filter as well as antenna bandwidths. It is noted that the range resolution of a radar system is defined as $R = \frac{C}{2*BW}$, where C denotes the speed of light propagation. As the targets get closer, it becomes harder to distinguish the reflected pulses; the bandwidth limitation impacts the resolution of the radar system since the reflected pulse from one target hides behind the reflected pulse from the other target.

Now discussed are a method of performing radar operations, a corresponding radar device and a corresponding radar system, which facilitate increasing the range resolution of the radar device and radar system, respectively, without a significant increase in costs in terms of complexity and power consumption. In particular, the presently disclosed method facilitates increasing the range resolution of said radar device or radar system, without a significant increase of the bandwidth of a transmitter and receiver or of the ADC sampling rate of said receiver. More specifically, the presently disclosed method facilitates improving the range resolution of a pulsed radar system; it may be categorized as a pulse compression technique used in radar systems for improving the range resolution.

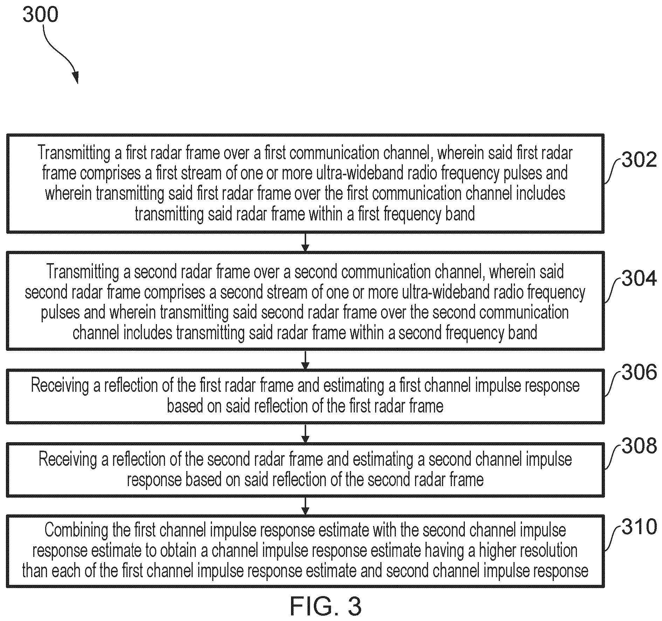

**Fig. 3** shows an illustrative embodiment of a method 300 of performing radar operations. The method 300 comprises the following steps. At 302, a first radar frame is transmitted over a first communication channel, wherein said first radar frame comprises a first stream of one or more ultra-wideband radio frequency pulses and wherein transmitting said first radar frame over the first communication channel includes transmitting said radar frame within a first frequency band. At 304, a second radar frame is transmitted over a second communication channel, wherein said second radar frame comprises a second stream of one or more ultra-wideband radio frequency pulses and wherein transmitting said second radar frame over the second communication channel includes transmitting said radar frame within a second frequency band. It is noted that the steps 302 and 304 may be performed simultaneously or sequentially. Furthermore, if performed sequentially, step 302 may be performed before step 304, or vice versa. Furthermore, at 306, a reflection of the first radar frame is received and a first channel impulse response is estimated based on said reflection of the first radar frame. Furthermore, at 308, a reflection of the second radar frame is received and a second channel impulse response is estimated based on said reflection of the second radar frame. It is noted that the steps 306 and 308 may be performed simultaneously or sequentially. Furthermore, if performed sequentially, step 306 may be performed before step 308, or vice versa. Finally, at 310, the first channel impulse response estimate is combined with the second channel impulse response estimate to obtain a channel impulse response estimate having a higher resolution than each of the first channel impulse response estimate and second channel impulse response estimate. Thereby, the range resolution of a radar device or radar system may be increased, without a significant increase in costs in terms of complexity and power consumption.

In one or more embodiments, the first frequency band and the second frequency band are non-overlapping frequency bands. This results in a practical implementation of the method. Furthermore, in one or more embodiments, the first frequency band and the second frequency band are adjacent frequency bands. This also results in a practical implementation of the method. Furthermore, in one or more embodiments, combining the first channel impulse response estimate with the second channel impulse response estimate includes performing an equalization and add operation on the first channel impulse response estimate and the second channel impulse response estimate. Equalization of individual CIRs may be required in implementations where the radio filters behavior for the first frequency band and the second frequency band can be different. Implementing the combining as an add operation results in a negligible increase in costs in terms of complexity and power consumption.

In one or more embodiments, the first stream of ultra-wideband radio frequency pulses is based on the function:

$$p_u(t) = p_+(t)e^{-j2\pi(BW/4)t},$$

wherein t denotes time, and:

$$p_+(t) = p(t) + j\widehat{p(t)},$$

wherein p(t) is a real-valued ultra-wideband radio frequency pulse waveform with a bandwidth BW and $\widehat{p(t)}$ denotes the Hilbert transformation of $p(t)$. This pulse construction technique facilitates implementing the step of combining the first channel impulse response estimate with the second channel impulse response estimate to obtain a channel impulse response estimate having a higher resolution than each of the first channel impulse response estimate and second channel impulse response estimate. In particular, pulse $p_u(t)$ is the basic pulse shape used on the first communication channel. More specifically, the radar frame transmitted on the first communication channel is a series of modulated pulses using $p_u(t)$ as the pulse shape. Furthermore, the pulse $p_u$

(t) is obtained by centering the pulse spectrum by rotating $p_+(t)$ with a time varying phasor.

In one or more embodiments, the second stream of ultra-wideband radio frequency pulses is based on the function:

$$p_l(t) = p_-(t)e^{+j2\pi(BW/4)t},$$

wherein t denotes time, and:

$$p_-(t) = p(t) - j\widehat{p(t)},$$

wherein p(t) is a real-valued ultra-wideband radio frequency pulse waveform with a bandwidth BW and $\widehat{p(t)}$ denotes the Hilbert transformation of $p(t)$. This pulse construction technique facilitates implementing the step of combining the first channel impulse response estimate with the second channel impulse response estimate to obtain a channel impulse response estimate having a higher resolution than each of the first channel impulse response estimate and second channel impulse response estimate. In particular, pulse $p_l(t)$ is the basic pulse shape used on the second communication channel. More specifically, the radar frame transmitted on the second communication channel is a series of modulated pulses using $p_l(t)$ as the pulse shape. Furthermore, the pulse $p_l(t)$ is obtained by centering the pulse spectrum by rotating $p_-(t)$ with a time varying phasor.

In one or more embodiments, the method further comprises applying the same radio filter settings for transmitting the first radar frame and transmitting the second radar frame, and enlarging the bandwidth of the filter for transmitting the first radar frame and the second radar frame. Thereby, the range resolution of a radar device or radar system may be further increased, without a significant increase in costs in terms of complexity and power consumption. In one or more embodiments, the method further comprises applying the same radio filter settings for receiving the reflection of the first radar frame and receiving the reflection of the second radar frame, and enlarging the bandwidth of the filter for receiving the reflection of the first radar frame and the second radar frame. Thereby, the range resolution of a radar device or radar system may be further increased, without a significant increase in costs in terms of complexity and power consumption. In a practical implementation, the first frequency band and the second frequency band have the same bandwidth or approximately the same bandwidth. Furthermore, in a practical implementation, each of the first frequency band and the second frequency band have an approximate bandwidth of 500 MHz.

In one or more embodiments, the steps of transmitting the first radar frame and transmitting the second radar frame, receiving the reflections of the first radar frame and the second radar frame, and combining the first channel impulse response estimate with the second channel impulse response estimate are performed by a single radar device. In this way, the presently disclosed method may be implemented in a mono-static radar system. Furthermore, in case the first stream of ultra-wideband radio frequency pulses is updated by centering the pulse spectrum by rotating with a time varying phasor, this step is also performed by the single radar device. Furthermore, in case the second stream of ultra-wideband radio frequency pulses is updated by centering the pulse spectrum by rotating with a time varying phasor, this step is also performed by the single radar device. Furthermore, in one or more embodiments, the steps of transmitting the first radar frame and transmitting the second radar frame are performed by a first radar device, and the steps of receiving the reflections of the first radar frame and the second radar frame and combining the first channel impulse response estimate with the second channel impulse response estimate are performed by a second radar device. In this way, the presently disclosed method may be implemented in a multi-static radar system. Furthermore, in case the first stream of ultra-wideband radio frequency pulses is updated by centering the pulse spectrum by rotating with a time varying phasor, this step is also performed by the second radar device. Furthermore, in case the second stream of ultra-wideband radio frequency pulses is updated by centering the pulse spectrum by rotating with a time varying phasor, this step is also performed by the second radar device. It is noted that, in case the presently disclosed method is implemented in a multi-static radar system, it may be necessary to estimate and compensate for a carrier frequency offset between the radar devices.

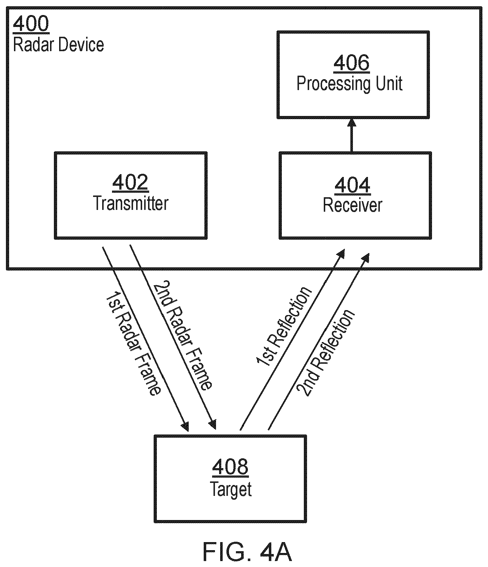

**Fig. 4A** shows an illustrative embodiment of a radar device 400. The radar device 400 comprises a transmitter 402, a receiver 404 and a processing unit 406. The radar device 400 is configured to detect an external target 408. The transmitter 402 is configured to transmit a first radar frame over a first communication channel, wherein said first radar frame comprises a first stream of one or more ultra-wideband radio frequency pulses and wherein transmitting said first radar frame over the first communication channel includes transmitting said radar frame within a first frequency band. The transmitter 402 is further configured to transmit a second radar frame over a second communication channel, wherein said second radar frame comprises a second stream of one or more ultra-wideband radio frequency pulses and wherein transmitting said second radar frame over the second communication channel includes transmitting said radar frame within a second frequency band. Furthermore, the receiver 404 is configured to receive a reflection of the first radar frame and to estimate a first channel impulse response based on said reflection of the first radar frame. The receiver 404 is further configured to receive a reflection of the second radar frame and to estimate a second channel impulse response based on said reflection of the second radar frame. Furthermore, the processing unit 406 is configured to combine the first channel impulse response estimate with the second channel impulse response estimate to obtain a channel impulse response estimate having a higher resolution than each of the first channel impulse response estimate and second channel impulse response estimate. The radar device 400 represents a mono-static radar system, which implements the presently disclosed method.

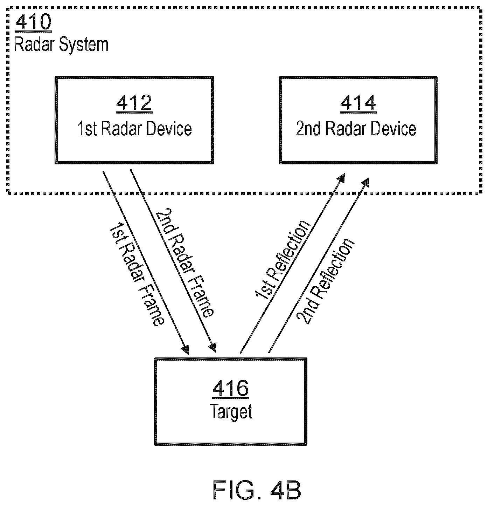

**Fig. 4B** shows an illustrative embodiment of a radar system 410. The radar system 410 comprises a first radar device 412 and a second radar device 414. The radar system 410 is configured to detect an external target 416. The first radar device 412 is configured to transmit a first radar frame over a first communication channel, wherein said first radar frame comprises a first stream of one or more ultra-wideband radio frequency pulses and wherein transmitting said first radar frame over the first communication channel includes transmitting said radar frame within a first frequency band. The first radar device 412 is further configured to transmit a second radar frame over a second communication channel, wherein said second radar frame comprises a second stream of one or more ultra-wideband radio frequency pulses and wherein transmitting said second radar frame over the second communication channel includes transmitting said radar frame within a second frequency band. Furthermore, the second radar device 414 is configured to receive a reflection of the first radar frame and to estimate a first channel impulse response based on said reflection of the first radar frame. The second radar device 414 is further configured to receive a reflection of the second radar frame and to estimate a second channel impulse response based on said reflection of the second radar frame. The second radar device 414 is further configured to combine the first channel impulse response estimate with the second channel impulse response estimate to obtain a channel impulse response estimate having a higher resolution than each of the first channel impulse response estimate and second channel impulse response estimate. The radar system 410 represents a multi-static radar system 410, which implements the presently disclosed method.

As mentioned above, the presently disclosed method facilitates increasing the range resolution without significantly increasing the transmitter bandwidth or the receiver bandwidth. In particular, the method involves a radar frame transmission and reception of reflections thereof over two sub-channels, for example with half the bandwidth, and combining the reflected signals in an efficient manner without a need to significantly increase said bandwidth or the ADC sampling rate at the receiver. More specifically, a wide-bandwidth transmission (e.g., 1 GHz) may be split into multiple transmissions over different sub-channels (e.g., each 500 MHz wide) and the received reflected radar frames across sub-channels may be combined to improve range resolution. Each sub-channel may then have a smaller bandwidth (e.g., 500 MHz), and therefore does not need wide-bandwidth antennas, or higher sampling rates or an increased digital signal processor (DSP) power consumption. A specific pulse construction technique may be applied for each sub-channel, and an associated simplified combining method in the form of an add operation may be applied, to facilitate implementing the presently disclosed method.

The presently disclosed method may get around the higher bandwidth requirement by splitting the wide-band transmission into multiple non-overlapping sub-channels. Multiple CIR measurements over each RF sub-channel may be performed, and the CIRs from each measurement may be combined to obtain an effective wide-bandwidth CIR. As an example, a 1 GHz bandwidth channel may be split into two non-overlapping sub-channels of 500 MHz bandwidth each. A CIR measurement over each sub-channel may involve transmission of one or several pulses; such a stream of repeated pulses is referred to as a radar frame. On the receiver side, the reflected stream of pulses on the same sub-channel may be coherently added to improve the CIR estimate quality. This combining only improves the quality of the estimate because of averaging over noise, and does not improve the resolution. The resolution of the CIR estimate from each sub-channel is limited because of the 500 MHz bandwidth. The CIR estimates from each sub-channel may be combined in such a way that the resolution is comparable to the resolution of a 1 GHz wide-band channel. A proper choice of pulses transmitted on each sub-channel may facilitate implementing the step of combining the CIR estimates from each sub-channel, so as to achieve the desired resolution.

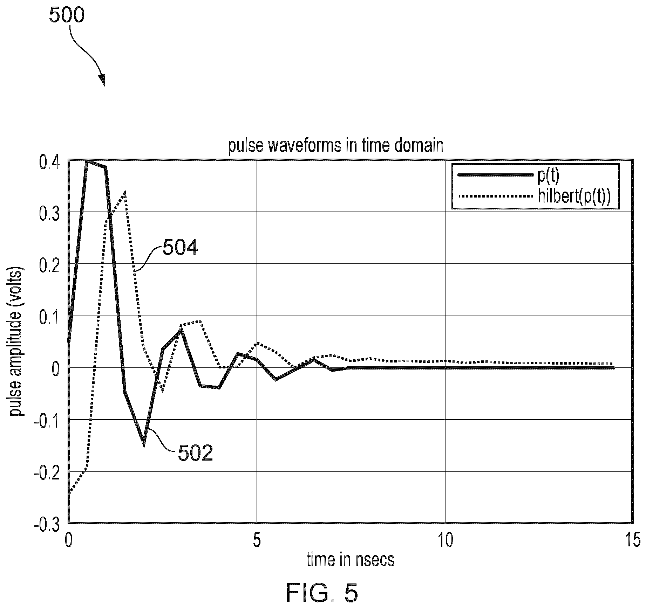

**Figs. 5, 6 and 7** show pulse waveforms in a time domain 500, a UWB pulse 600, and sub-channel pulse shapes in a frequency domain 700, respectively. In particular, Figs. 5, 6 and 7 illustrate pulse characteristics when the following pulse construction technique is applied. The technique is based on the assumption that p(t) is a real-valued UWB pulse waveform, with bandwidth BW (e.g., 1GHz) optimized for a radar application. In that case, two complex waveforms may be created as follows:

$$p_+(t) = p(t) + j\widehat{p(t)}$$

and

$$p_-(t) = p(t) - j\widehat{p(t)}$$, where $\widehat{p(t)}$ denotes the Hilbert transformation of *p(t)*. It can be shown that both *p+(t)* and *p-(t)* are pulses with bandwidth *BW*/2, wherein *p+(t)* is band-limited to $0 \leq f \leq BW/2$, while *p-(t)* is band-limited to $-BW/2 \leq f \leq 0$. The pulses may be rotated so that the "center" frequency shifts and they are both band-limited to $-BW/4 \leq f \leq BW/4$. This results in the following functions: $$p_u(t) = p_+(t)e^{-j2\pi(BW/4)t}$$

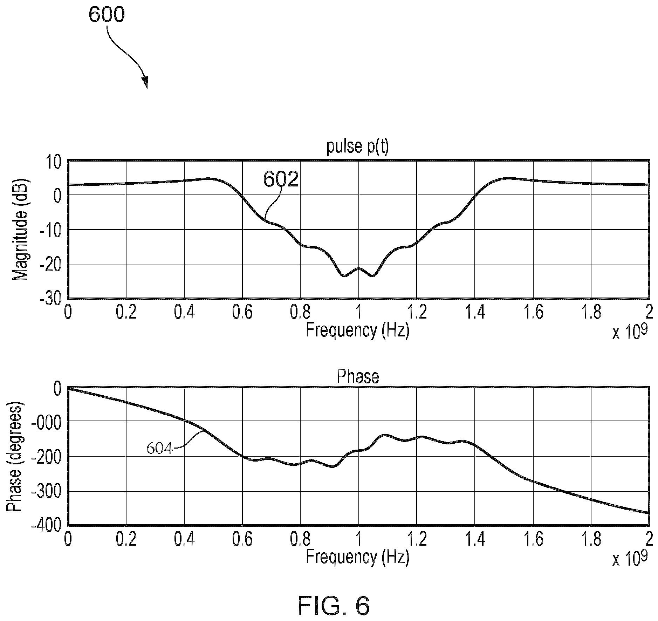

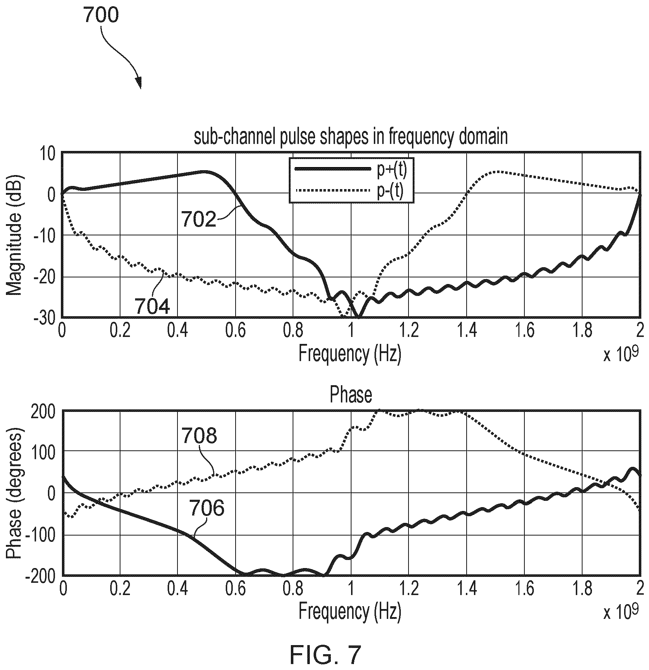

and $$p_l(t) = p_-(t)e^{+j2\pi(BW/4)t}$$. It is noted that the UWB pulse *p(t)* can be selected or optimized so that the both the pulses $p_u(t)$ and $p_l(t)$ meet the emission requirements specified in various standards, such as IEEE/FiRa/FCC requirements for the *BW*/2 bandwidth UWB system. Furthermore, it is noted that Figs. 5 and 6 illustrate a system having a bandwidth BW of 1 GHz, and that Fig. 7 illustrates sub-channels, each of which having a bandwidth of 500 MHz.

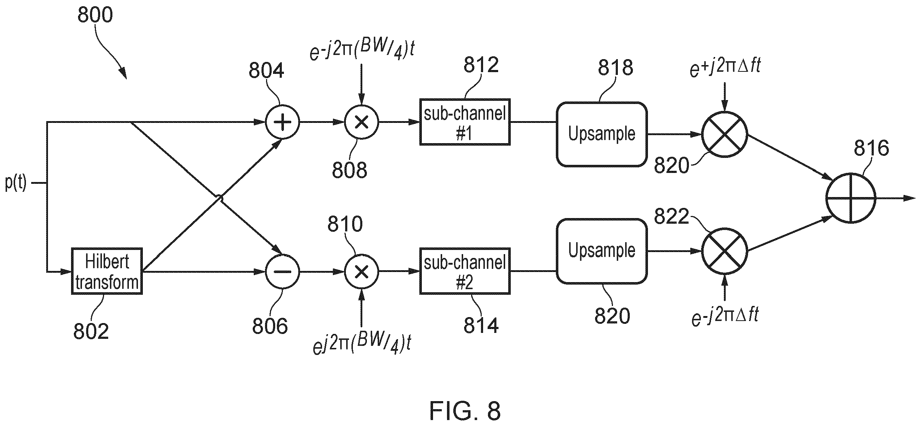

**Fig. 8** shows a pulse transmission and CIR combining technique 800. Based on the above-described example of a pulse construction technique, the pulse transmission and CIR combining may be implemented as follows. Let $f_{c,u}$ and $f_{c,l}$ denote the center frequencies of two UWB RF channels that are $BW/2$ Hz apart. As an example, $f_{c,l}$ can be Channel #8 and $f_{c,u}$ can be Channel #9 as defined in the IEEE 802.15.4 UWB specifications, if BW = 1 GHz. The radar transmission on $f_{c,u}$ may be implemented as follows: transmit a radar frame (stream of pulses) on sub-channel centered at $f_{c,u}$ using pulse $p_u(t)$, receive the pulse stream over sub-channel centered at $f_{c,u}$ with bandwidth $BW/2$, and coherently combine the pulses to get CIR estimate *CIR(u)*. Furthermore, the radar transmission on $f_{c,l}$ may be implemented as follows: transmit a radar frame (stream of pulses) on 500MHz sub-channel centered at $f_{c,l}$ using pulse $p_l(t)$, receive the pulse stream over sub-channel centered at $f_{c,l}$, with bandwidth $BW/2$, and coherently combine the pulses to get CIR estimate *CIR(l)*. Then, using the two CIR estimates (with limited resolution because of bandwidth $BW/2$), a new CIR estimate is created by adding: *CIR estimate = CIR(u) + CIR(l)*. It is noted that the CIR estimates may be upsampled 818, 820, for example interpolated by a factor of 2. Furthermore, mixers 820, 820 perform a mixing operation before the addition 816 is performed. In particular, the first CIR estimate is realigned by a frequency shift of the baseband CIR to the lower channel, and the second CIR estimate is realigned by a frequency shift of the baseband CIR to the upper channel. Furthermore, an equalization is performed by filtering the first CIR estimate and second CIR estimate. The new CIR estimate which is created by the addition 816 has an improved range resolution.

By virtue of the construction and transmission over two adjacent channels of bandwidth *BW*/2, the combined CIR estimate is expected to have a higher resolution equivalent to a full BW Hz radar system. The receiver and transmitter operate on sub-channels of bandwidth *BW*/2, and so the complexity and power consumption is lower compared to transmitting and receiving a pulse over BW bandwidth. The constructed sub-channel pulses inherit certain properties from the wider bandwidth pulse shape, and therefore the above-described pulse construction technique is well suited to design pulse shapes that meet various regulatory constraints in terms of occupied bandwidth.

It is noted that the resolution of the combined CIR is dependent on the transmitter and receiver filter bandwidths. If the filter responses between the two sub-channels change substantially due to different RF tunings, the achievable range resolution may be less than an ideal BW Hz UWB system. In such circumstances, an alternate approach is to make the analog transmit and receive filter bandwidths wider (i.e., BW Hz) and use the same filter settings for both sub-channels. However, in that case there is no need to increase the sampling rate; the ADC may continue operating in the lower bandwidth mode (*BW*/2 Hz).

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

LIST OF REFERENCE SIGNS

| | |
|---|---|
| 100 | target detection system |
| 102 | radar device |
| 104 | first target |
| 106 | second target |
| 200 | ideal CIR |
| 202 | first path |
| 204 | strongest path |
| 300 | method of performing radar operations |
| 302 | transmitting a first radar frame over a first communication channel, wherein said first radar frame comprises a first stream of one or more ultra-wideband radio frequency pulses and wherein transmitting said first radar frame over the first communication channel includes transmitting said radar frame within a first frequency band |
| 304 | transmitting a second radar frame over a second communication channel, wherein said second radar frame comprises a second stream of one or more ultra-wideband radio frequency pulses and wherein transmitting said second radar frame over the second communication channel includes transmitting said radar frame within a second frequency band |
| 306 | receiving a reflection of the first radar frame and estimating a first channel impulse response based on said reflection of the first radar frame |
| 308 | receiving a reflection of the second radar frame and estimating a second channel impulse response based on said reflection of the second radar frame |
| 310 | combining the first channel impulse response estimate with the second channel impulse response estimate to obtain a channel impulse response estimate having a higher resolution than each of the first channel impulse response estimate and second channel impulse response estimate |
| 400 | radar device |
| 402 | transmitter |
| 404 | receiver |
| 406 | processing unit |
| 408 | target |
| 410 | radar system |
| 412 | first radar device |
| 414 | second radar device |
| 416 | target |
| 500 | pulse waveforms in a time domain |
| 502 | p(t) |

504 Hilbert(p(t))
600 UWB pulse p(t)
602 magnitude
604 phase
700 sub-channel pulse shapes in a frequency domain
702 magnitude of p+(t)
704 magnitude of p-(t)
706 phase of p+(t)
708 phase of p-(t)
800 pulse transmission and CIR combining
802 Hilbert transform
804 addition
806 subtraction
808 multiplication
810 multiplication
812 first sub-channel
814 second sub-channel
816 addition
818 upsample
820 upsample
820 mixer
822 mixer

**Claims**

1. A method of performing radar operations, comprising:

   transmitting a first radar frame over a first communication channel, wherein said first radar frame comprises a first stream of one or more ultra-wideband radio frequency pulses and wherein transmitting said first radar frame over the first communication channel includes transmitting said radar frame within a first frequency band;
   transmitting a second radar frame over a second communication channel, wherein said second radar frame comprises a second stream of one or more ultra-wideband radio frequency pulses and wherein transmitting said second radar frame over the second communication channel includes transmitting said radar frame within a second frequency band;
   receiving a reflection of the first radar frame and estimating a first channel impulse response based on said reflection of the first radar frame;
   receiving a reflection of the second radar frame and estimating a second channel impulse response based on said reflection of the second radar frame;
   combining the first channel impulse response estimate with the second channel impulse response estimate to obtain a channel impulse response estimate having a higher resolution than each of the first channel impulse response estimate and second channel impulse response estimate.

2. The method of claim 1, wherein the first frequency band and the second frequency band are non-overlapping frequency bands.

3. The method of any preceding claim, wherein the first frequency band and the second frequency band are adjacent frequency bands.

4. The method of any preceding claim, wherein combining the first channel impulse response estimate with the second channel impulse response estimate includes performing an equalization and add operation on the first channel impulse response estimate and the second channel impulse response estimate.

5. The method of any preceding claim, wherein the first stream of ultra-wideband radio frequency pulses is based on the function:

$$p_u(t) = p_+(t)e^{-j2\pi(BW/4)t},$$

wherein t denotes time, and:

$$p_+(t) = p(t) + j\widehat{p(t)},$$

wherein p(t) is a real-valued ultra-wideband radio frequency pulse waveform with a bandwidth BW, and $\widehat{p(t)}$ denotes the Hilbert transformation of *p(t)*.

6. The method of any preceding claim, wherein the second stream of ultra-wideband radio frequency pulses is based on the function:

$$p_l(t) = p_-(t)e^{+j2\pi(BW/4)t},$$

wherein t denotes time, and:

$$p_-(t) = p(t) - j\widehat{p(t)},$$

wherein p(t) is a real-valued ultra-wideband radio frequency pulse waveform with a bandwidth BW, and $\widehat{p(t)}$ denotes the Hilbert transformation of *p(t)*.

7. The method of any preceding claim, further comprising applying the same radio filter settings for transmitting the first radar frame and transmitting the second radar frame, and enlarging the bandwidth of the filter for transmitting the first radar frame and the second radar frame.

8. The method of any preceding claim, further comprising applying the same radio filter settings for receiving the reflection of the first radar frame and receiving the reflection of the second radar frame, and enlarging the bandwidth of the filter for receiving the reflection of the first radar frame and the second radar frame.

9. The method of any preceding claim, wherein the first frequency band and the second frequency band have the same bandwidth or approximately the same bandwidth.

10. The method of any preceding claim, wherein each of the first frequency band and the second frequency band have an approximate bandwidth of 500 MHz.

11. The method of any preceding claim, wherein the steps of transmitting the first radar frame and transmitting the second radar frame, receiving the reflections of the first radar frame and the second radar frame, and combining the first channel impulse response estimate with the second channel impulse response estimate are performed by a single radar device.

12. The method of any preceding claim, wherein the steps of transmitting the first radar frame and transmitting the second radar frame are performed by a first radar device, and wherein the steps of receiving the reflections of the first radar frame and the second radar frame, and combining the first channel impulse response estimate with the second channel impulse response estimate are performed by a second radar device.

13. A radar device, comprising:

a transmitter configured to transmit a first radar frame over a first communication channel, wherein said first radar frame comprises a first stream of one or more ultra-wideband radio frequency pulses and wherein transmitting said first radar frame over the first communication channel includes transmitting said radar frame within a first frequency band;
the transmitter further being configured to transmit a second radar frame over a second communication channel, wherein said second radar frame comprises a second stream of one or more ultra-wideband radio frequency pulses and wherein transmitting said second radar frame over the second communication channel includes transmitting said radar frame within a second frequency band;
a receiver configured to receive a reflection of the first radar frame and to estimate a first channel impulse response based on said reflection of the first radar frame;

the receiver further being configured to receive a reflection of the second radar frame and to estimate a second channel impulse response based on said reflection of the second radar frame;
a processing unit configured to combine the first channel impulse response estimate with the second channel impulse response estimate to obtain a channel impulse response estimate having a higher resolution than each of the first channel impulse response estimate and second channel impulse response estimate.

14. A radar system, comprising:

a first radar device configured to transmit a first radar frame over a first communication channel, wherein said first radar frame comprises a first stream of one or more ultra-wideband radio frequency pulses and wherein transmitting said first radar frame over the first communication channel includes transmitting said radar frame within a first frequency band;
the first radar device further being configured to transmit a second radar frame over a second communication channel, wherein said second radar frame comprises a second stream of one or more ultra-wideband radio frequency pulses and wherein transmitting said second radar frame over the second communication channel includes transmitting said radar frame within a second frequency band;
a second radar device configured to receive a reflection of the first radar frame and to estimate a first channel impulse response based on said reflection of the first radar frame;
the second radar device further being configured to receive a reflection of the second radar frame and to estimate a second channel impulse response based on said reflection of the second radar frame;
the second radar device further being configured to combine the first channel impulse response estimate with the second channel impulse response estimate to obtain a channel impulse response estimate having a higher resolution than each of the first channel impulse response estimate and second channel impulse response estimate.

100

Target2
106

Target1
104

Radar device
102

FIG. 1

FIG. 2

300

Transmitting a first radar frame over a first communication channel, wherein said first radar frame comprises a first stream of one or more ultra-wideband radio frequency pulses and wherein transmitting said first radar frame over the first communication channel includes transmitting said radar frame within a first frequency band /302

Transmitting a second radar frame over a second communication channel, wherein said second radar frame comprises a second stream of one or more ultra-wideband radio frequency pulses and wherein transmitting said second radar frame over the second communication channel includes transmitting said radar frame within a second frequency band /304

Receiving a reflection of the first radar frame and estimating a first channel impulse response based on said reflection of the first radar frame /306

Receiving a reflection of the second radar frame and estimating a second channel impulse response based on said reflection of the second radar frame /308

Combining the first channel impulse response estimate with the second channel impulse response estimate to obtain a channel impulse response estimate having a higher resolution than each of the first channel impulse response estimate and second channel impulse response /310

FIG. 3

400
Radar Device

406
Processing Unit

402
Transmitter

404
Receiver

1st Radar Frame

2nd Radar Frame

1st Reflection

2nd Reflection

408
Target

FIG. 4A

**410**
Radar System

**412**
1st Radar Device

**414**
2nd Radar Device

1st Radar Frame

2nd Radar Frame

1st Reflection

2nd Reflection

**416**
Target

FIG. 4B

FIG. 5

FIG. 6

FIG. 7

FIG. 8

**EUROPEAN SEARCH REPORT**

Application Number

EP 25 17 1329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 538 735 A1 (NXP BV [NL]) 16 April 2025 (2025-04-16) | 1-4, 9-11,13, 14 | INV. G01S13/00 G01S13/02 |
| A,P | * paragraphs [0008] - [0012], [0025] - [0045] * | 5-8,12 | G01S13/10 G01S13/30 |
| | ----- | | |
| X | US 2022/091278 A1 (TIBERIUS CHRISTIAAN CHRISTOFFEL JOHAN [NL] ET AL) 24 March 2022 (2022-03-24) | 1-4,7-14 | |
| A | * paragraphs [0013], [0017], [0025], [0029], [0041] - [0047], [0116], [0117], [0148] * | 5,6 | |
| | ----- | | |
| A | CHERAGHINIA MOHAMMAD ET AL: "A Comprehensive Overview on UWB Radar: Applications, Standards, Signal Processing Techniques, Datasets, Radio Chips, Trends and Future Research Directions", IEEE COMMUNICATIONS SURVEYS & TUTORIALS, 1 January 2024 (2024-01-01), XP093275087, ISSN: 2373-745X, DOI: 10.1109/COMST.2024.3488173 Retrieved from the Internet: URL:https://arxiv.org/pdf/2402.05649> * Sections I-IV. * | 1-14 | TECHNICAL FIELDS SEARCHED (IPC) G01S |
| | ----- | | |

The present search report has been drawn up for all claims

| Place of search | Date of completion of the search | Examiner |
|---|---|---|
| Munich | 19 August 2025 | Fernández Cuenca, B |

EPO FORM 1503 03.82 (P04C01)

**ANNEX TO THE EUROPEAN SEARCH REPORT
ON EUROPEAN PATENT APPLICATION NO.**                    EP 25 17 1329

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2025

| Patent document cited in search report | | Publication date | Patent family member(s) | | Publication date |
|---|---|---|---|---|---|
| EP 4538735 | A1 | 16-04-2025 | CN | 119828121 A | 15-04-2025 |
|  |  |  | EP | 4538735 A1 | 16-04-2025 |
| US 2022091278 | A1 | 24-03-2022 | CN | 114144694 A | 04-03-2022 |
|  |  |  | EP | 3956682 A1 | 23-02-2022 |
|  |  |  | US | 2022091278 A1 | 24-03-2022 |
|  |  |  | WO | 2020214026 A1 | 22-10-2020 |

EPO FORM P0459

For more details about this annex : see Official Journal of the European Patent Office, No. 12/82